# EUROPEAN PATENT APPLICATION

(11) **EP 1 568 534 A1**
(43) Date of publication of application: **31.08.2005**
(21) Application number: 04004337.4
(22) Date of filing: 26.02.2004
(51) Int. Cl.: B60N 2/02

(54) **Seating position indicator**

(71) Applicant: Ford Global Technologies, LLC, Dearborn, MI 48126 (US)
(72) Inventor: Reinhardt, Helene, 42672 Västra Frölunda (SE); Holmberg, Elna, 42674 Västra Frölunda (SE)
(74) Representative: Spitmann, Knut Hermann

(57) **Abstract**

The present invention relates to an arrangement (10) for assisting a passenger (22) to obtain a correct seating position in a seat (21) of a vehicle. The vehicle comprising at least said seat (21) and an area (20) which may be seen by said passenger (22) when seated in said seat (21). The arrangement (10) comprising a position indicator (11) being arranged to be provided on said area (20). The position indicator (11) displaying at least a first image (13) when seen in at least a first corresponding optic angle interval (α), and a second image (14) when seen in at least a second corresponding optic angle interval (β).

## Description

The present invention relates to an arrangement for assisting a passenger to obtain a correct seating position in a seat of a vehicle. The present invention also relates to a vehicle provided with such an arrangement.

### TECHNICAL BACKGROUND

In the present day situation it is well-known that the ergonomics of the passengers, and particularly the ergonomics of the driver in vehicles, have an impact on the number of traffic incidents and accidents. For example, the risk of traffic incidents and accidents increases when the sight and visibility of the surrounding traffic by the driver is unsatisfactory.

In many cases an unsatisfactory sight and visibility depend on the seating position of the driver in the vehicle. Then the seating position of the driver may be too high or too low in the vertical direction due to a too high or too low position of the seat. Obviously, the seating position of the driver may also depend on the inclination of the driver's seat.
In a greater perspective an unsatisfactory sight and visibility depend on the described seating position and the actual seat position but do also depend on the position of the steering wheel and the pedals. However, the position of the steering wheel and the pedals is not discussed hereinafter.

The seat position itself is generally manually or electrically adjusted by the driver and the other passengers in a vehicle. Today, automatically seat position adjustments are known as well. One type of automatically seat position adjustments is pre-adjustment for a particular person, e.g. a particular seat position is connected to a particular ignition key. This implies that the seat take a particular position with respect to the inclination and the vertical and horizontal position of the seat.

However, a confirmation or a "warning" of an unsatisfactory seating position of the driver is neither provided nor communicated to the driver.

### SUMMARY OF THE INVENTION

It is an object of the present invention to provide an arrangement for assisting a passenger to obtain a correct seating position in a seat of a vehicle. Particularly, it is an object to ensure and confirm a good ergonomic seating position of the passenger, particularly with regard to the sight and visibility of the surrounding traffic by the passenger. In this way the passive safety is increased, and the risk for incidents and accidents is decreased.

It is also an object of the present invention to provide a technical design, which may be inexpensive to manufacture and use.

It is a further object to achieve a technical design which is easily provided in every vehicle on the market, i.e. existing vehicles and newly manufactured vehicles. Obviously, this is also valid for vehicles on sale, exhibitions and vehicle shows, etc.

These objects are achieved in accordance with the present invention by means of an arrangement for assisting a passenger to obtain a correct seating position in a seat of a vehicle as claimed in claim 1, and by means of a vehicle provided with said inventive arrangement as claimed in claim 11, wherein the vehicle comprises at least said seat and an area which may be seen by said passenger when seated in said seat, and the arrangement comprising a position indicator being arranged to be provided on said area, and the position indicator displaying at least a first image when seen in at least a first corresponding optic angle interval, and a second image when seen in at least a second corresponding optic angle interval.

In this context, the optic angle is defined as the viewing angle from the eyes of the passenger towards the image(s) with relation to the normal against the plane of the position indicator displaying the image(s). The position indicator displaying the images is fixedly arranged onto an area inside a vehicle. The passenger views or monitors the position indicator in different viewing angles with relation to the normal against plane of the position indicator when seated in different seating positions, particularly in the vertical direction. "An optic angle interval" relates to an interval of such angles.

By means of the invention, the at least first and second images indicate the position of the eyes of the passenger when seated in at least two different seating positions. The passenger may see the different images, which indicate different seating positions on the position indicator on the area that may be seen by the passenger (hereinafter referred to as "the area") in the vehicle when viewing the position indicator in different optic angles. Obviously, the passenger views the area in different optic angles when seated in different seating positions since the eyes of the passenger then is located in different positions, particularly with regard to the vertical position thereof.

In a first preferred embodiment of the invention, the position indicator comprises a lenticular 3D (three dimensional) object. A side or surface of the position indicator is substantially flat. The side or surface is preferably provided with the lenticular 3D object. The position indicator is preferably constituted of a card which is manufactured of a plastic material. Thus, the plastic card is preferably provided with a lenticular 3D object displaying at least the described first image when seen in the corresponding first optic angle interval, and the second image when seen in the corresponding second optic angle interval.

In the present day situation so-called lenticular printing processes are well-known as well. Generally, the lenticular printing processes are printing processes allowing pictures having depth (three dimensional, i.e. 3D), motion, video, film or a combination of these to be printed and thereby displayed on a flat sheet or piece of a plastic material. In practise lenticular 3D cards are well-known in the advertising business, for instance for advertising articles or the like.

The image effects of the lenticular 3D cards are created by using "lenticules" provided into the plastic piece which operate as a decoder for the image which is printed behind the lenticules (hence the name "lenticular" printing). In greater detail, the lenticular material is created by means of lenses or tiny ridges. The described ridges generally have a "saw-toothed" characteristic in profile. The ridges substantially protrude in the direction of the normal of the lenticular 3D card.
In greater detail, the raw images are processed through a computer algorithm which matches the lens surface of the lenticular material and then enables the images to be shown to a viewer.

The sizes and the amounts of the described ridges decide the size of the shown image, or the distance at which the images is intended to be seen, i.e. the so-called "viewing distances". Generally, a fine gauge lenticular (tiny ridges) tends to be used for applications having close viewing distances, and heavy gauge lenticular (great ridges) tends to be used for applications having large viewing distances.

The lenticular 3D cards may be tilted or angled, for instance rotated an angle around a horizontal axis running through the centre of the card, whereby the cards may display different images when viewed in different optic angles (depending on how the cards are designed).

The lenticular 3D printing technology is well-known in prior art and is therefore not described any further hereinafter.

In the first preferred embodiment of the invention, the plastic card comprises the lenticular 3D images showing the first image which then indicates a correct seating position of the passenger in an ergonomic aspect, and the second image which then indicates an incorrect seating position of the passenger in an ergonomic aspect. Advantageously, the second optic angle interval is then constituted of the remaining optic angle intervals.

In this context, a "correct" seating position of the passenger in an ergonomic aspect relates to the position of the eyes of the passenger for providing him or her good sight and visibility of the surrounding traffic and pedestrians for avoiding traffic incidents and accidents. Accordingly, an "incorrect" seating position relates to the position of the eyes of the passenger providing him or her poor visibility of the surrounding traffic and pedestrians. An indication of an incorrect seating position of the passenger could indicate a higher risk for a traffic incidents or accidents.

By means of the invention, if the seating position of the passenger is not satisfactory in an ergonomic aspect, i.e. if the passenger is not provided with a good sight and visibility of the surrounding traffic in the seating position, it is appropriate that the passenger adjusts the seating position. Thus, the inventive arrangement operates as a type of visibility confirm ability concept.

If the seating position is satisfactory in an ergonomic aspect, i.e. if the passenger is provided with a good sight and visibility of the surrounding traffic in the seated position, the passenger obtains a type of confirmation thereof.

In the first most preferred embodiment, the lenticular 3D object displays at least two already described images indicating incorrect seating positions in an ergonomic aspect, whereof the described second image indicates a too high vertical seating position of the passenger when seen in a corresponding second optic angle interval, and a third image indicates a too low vertical seating position of the passenger when seen in a third corresponding optic angle interval. This embodiment the first image still indicates a correct seating position in an ergonomic aspect.

By means of the invention, if the passenger is located in a too high vertical seating position, the second image appears and then indicates that the passenger should adjust his or hers seating position in a substantially downward direction. This is achieved by displacing the seat in a substantially downward direction, or alternatively to adjust the seat in another inclination with relation to the plane of the floor of the vehicle compartment so that the passenger is displaced in a substantially downward direction. Accordingly, if the passenger is located in a too low vertical seating position the third image appears and then indicates that the passenger should adjust his or hers seating position in a substantially upward direction. This is achieved by displacing the seat in a substantially upward direction or alternatively to adjust the seat in another inclination with relation to the plane of the floor of the vehicle compartment so that the passenger is displaced in a substantially upward direction.
If the passenger is located in a correct seating position in an ergonomic aspect, an image does preferably not appear. More preferably, the image and preferably also the plastic card it self are then transparent and runs together with the area such as the cloth and colour of the area. Obviously, another type of image which indicates a correct seating position could also appear.

In the first preferred embodiment, the area that may be seen by the passenger is a part of a pillar, which may be seen by the passenger when seated in the seating position. It can be any area substantially in front of the passenger and in a suitable vertical level so the area may be seen by the passenger when seated in the intended seat of the vehicle. Preferably, the pillar is constituted of an A, B or C pillar.

The pillar, and consequently the plane of the position indicator, is generally angled against the ground (or alternatively angled to the normal against the ground). Moreover, the pillar itself is generally provided with a curvature. Since the passenger views the positions indicator in the described optic angle or the viewing angle, the described ridges, lenticules or saw-tooth characteristic of the lenticular 3D-card are preferably provided so that they are directed and thereby points against the eyes of the passenger. In greater detail, the described protruding lenticules of the lenticular 3D-card are preferably provided fixedly protruding in the same angle against the normal to the lenticular 3D card or the plane of the lenticular 3D-card as an intended correct viewing angle of a great number of people.

Advantageously, the pillar is constituted of the A pillar since the passenger is preferably the driver of the vehicle. However, any passenger of the vehicle can have benefit of the inventive arrangement for purely ergonomic reasons.

In the first preferred embodiment, the position indicator is provided on the area by means of a fastening means. For instance, the fastening means is constituted of an adhesive so that the position indicator merely may be pushed or be impressed onto the surface of the area that may be seen by the passenger, e.g. the A-pillar. However, the fastening means can also be constituted of a snapping means onto which the position indicator may be snapped. The pillar can also be provided with a holder means into which the position indicator can be put or inserted.

In a second preferred embodiment of the invention, the position indicator arranged on the area comprises an electrical means for displaying the at least first and second images when seen in different optic angles. For example, the position indicator can then be provided with monochromatic light. Advantageously, in other aspects the same characteristics as described above can then be provided by means of the inventive arrangement.

Preferably, a correct seating position of the passenger in an ergonomic aspect relates to the position of the eyes of the passenger for providing the passenger a good sight and visibility of the surrounding traffic. Moreover, the position of the eyes of the passenger in relation to the position of the position indicator is adjustable for persons having different height and body constitution.

### BRIEF DESCRIPTION OF THE DRAWINGS

The invention will be described in the following by way of example only and with reference to the embodiments illustrated in the drawings, in which
- Fig. 1a-1c: shows principal sketches of the position indicator of the inventive arrangement, and
- Fig. 2: shows a principal sketch of the inventive arrangement provided in a vehicle.

### DETAILED DESCRIPTION OF PREFERRED EMBODIMENTS

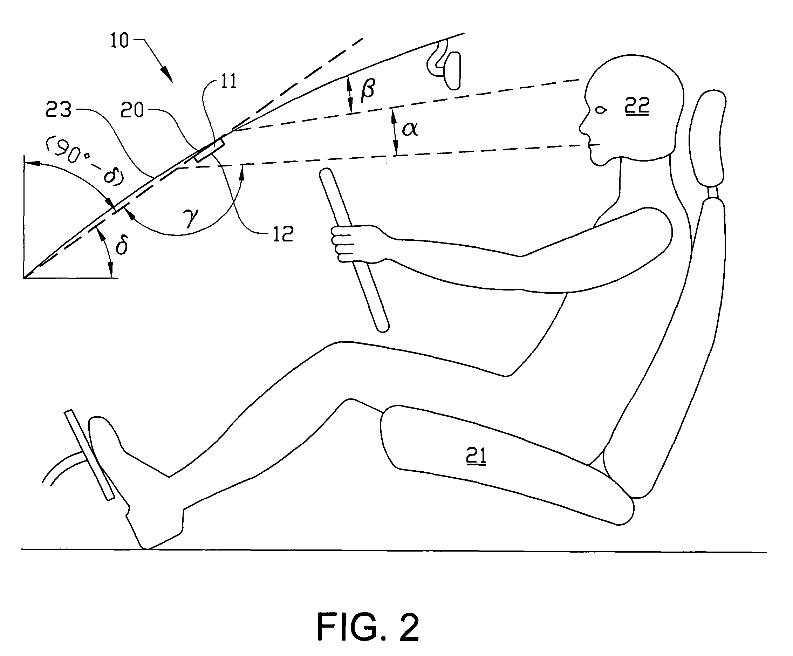

In the drawings, reference numeral 10 generally denotes an arrangement for assisting a passenger 22 to obtain a correct seating position in a seat 21 of a vehicle, see Fig. 2. Hereinafter, the passenger 22 is preferably constituted of the driver of the vehicle.

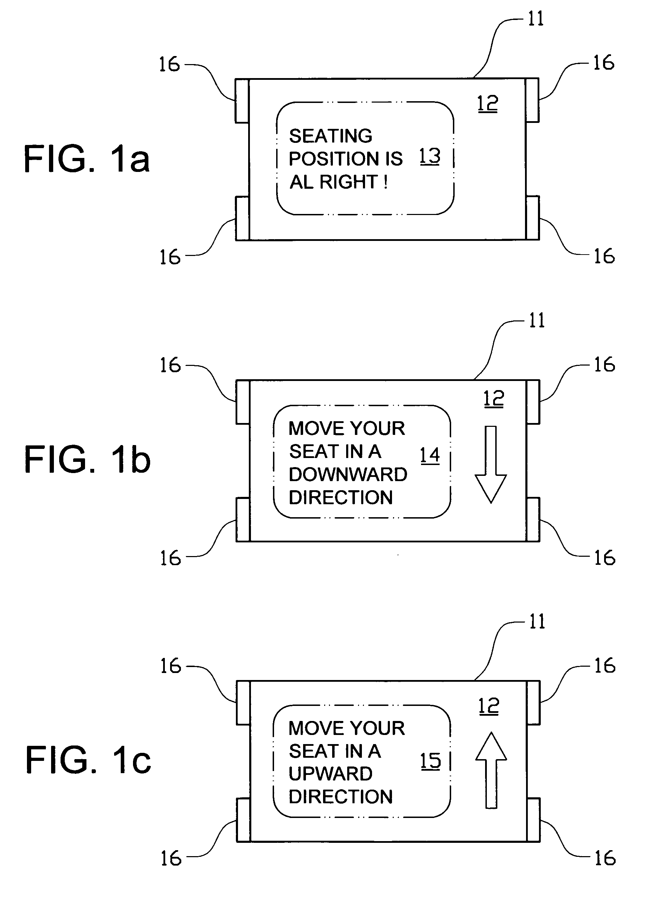

In a preferred embodiment of the invention, the arrangement 10 comprises a position indicator. The position indicator is constituted of a plastic card 11 which in turn comprises a substantially flat side 12 which is provided with a lenticular 3D (three dimensional) object, see Figs. 1a-1c.
The lenticular 3D object comprises lenticules which are provided into the plastic card. The lenticules are a type of lenses which serve as a decoder for the image(s) which is arranged behind the lenticules (not shown in the figures). This technology is well-known in prior art and is therefore not further described hereinafter.
The lenticular 3D object may display different lenticular 3D images when seen in different optic angle intervals. As can be seen in the figures, in the preferred embodiment the lenticular 3D object shows a first 13, a second 14 and a third image 15 when viewed in corresponding different optic angle intervals, see Figs. 1a-1c.

In this context, the optic angle is defined as the viewing angle from the eyes of the passenger 22 towards the image(s) with relation to the normal against the plane of the position indicator 11 displaying the image(s). The position indicator 11 displaying the images is fixedly arranged onto an area 20 in a vehicle. The passenger 22 views or monitors the position indicator 11 in different viewing angles with relation to the normal against plane of the position indicator 11 when seated in different seating positions, particularly in the vertical direction. "An optic angle interval" relates to intervals of such viewing angles, e.g. 0°-10°, 10°-20°, 20°-30°, etc. For instance, in Fig. 2 the passenger 22 has the capacity to view the image for a correct seating position shown in Fig. 1a in the viewing angle interval α (=(90°-β) - (90°-(β+α))).

Obviously, in practice the described plastic card 11 can be tilted or inclined around e.g. a horizontal axis running through the centre of the card 11 so that the side 12 is angled in relation to the angle of incidence of a passenger 22 standing still and viewing the card 11. In this way, it is possible for the passenger 22 to see the first 13, the second 14 and the third image 15 of the plastic card 11 in three corresponding optic angle intervals when tilting the card 11.

However, in operation the plastic card 11 is fixedly provided onto an area 20 that may be shown to the passenger 22 when seated in a seat 21 in a vehicle see Fig. 2. Preferably, the area 20 is constituted of an A pillar 23 since the passenger 22 is preferably the driver of the vehicle. However, any passenger 22 of the vehicle can obviously have benefit of the first embodiment of the inventive arrangement 10 in form of the plastic card 11 provided with the lenticular 3D object and then arranged onto the area 20 that may be shown to the passenger 22 when seated in a seat 21 in a vehicle.

In the first preferred embodiment, the pillar 23, and consequently the plane of the position indicator, is angled against the ground (or alternatively angled to the normal against the ground), see δ in Fig. 2. The pillar 23 itself is generally provided with a curvature. Since the passenger 22 can view the positions indicator 11 in the described intended correct optic angle α or the viewing angle, the described ridges, lenticules or saw-tooth characteristic of the lenticular 3D-card are preferably fixedly provided so that they are directed against the eyes of the passenger 22 (not shown in the figures).

Furthermore, the position of the actual area 20 is tested out so it fits approximately 95% of the population. The other 5% has to be provided with an individual position of the area 20 for the position indicator 11. Preferably, such a position of the area 20 can be provided of the vehicle manufacturer, the vehicle sales man or an ergonomically skilled person.

The plastic card 11 is provided onto the area 20 by means of a fastening means 16. In a preferred embodiment, the fastening means 16 is constituted of an adhesive so the plastic card 11 can be pushed onto the area 20. However, the fastening means 16 can also be constituted of a snapping means, onto which the plastic card 11 can be snapped, or even a holder means into which the plastic card 11 can be inserted or placed.
When the plastic card 11 is provided onto the area 20, the card 11 obtains a fixed position until the passenger 22 or another person removes the card 11 or changes the position of the card 11.

As can be seen in Fig. 2 according to the preferred embodiment, the total possible interval of angles of incidence of a passenger 22 viewing the card 11 provided on the area 20 in the vehicle can principally be divided in three different optic angle intervals, see Fig. 2.
The first optic angle interval α corresponds to the visibility of the passenger. The first optic angle interval α may correspond to an angle interval of 20°, for instance an angle interval from 30° to 50° from the plane of the plastic card 11 in Fig. 2.
The second optic angle interval β corresponds to a too high vertical position of the eyes of the passenger 22, or in reality a too high seating position of the passenger 22. The second optic angle interval β may correspond to an angle interval of 30°, for instance an angle interval from 0° to 30° from the plane of the plastic card 11 in Fig. 2.
The third optic angle interval γ corresponds to a too low vertical seating position of the eyes of the passenger 22, or in reality a too low seating position of the passenger 22. The third optic angle interval γ may correspond to an angle interval of 130°, for instance an angle interval from 50° to 180° from the plane of the plastic card 11 in Fig. 2.

These estimated optic angle intervals obviously differ for people having different height and body constitution of their torso, etc. Therefore the position of the plastic card 11 and thereby the location of the area 20 can be dimensioned so that it is valid for 95% or the population with some exceptions, for example men of a large height and women of a short height.

Fig. 1a shows an example of a first image 13 of the lenticular 3D object of the plastic card 11 when seen in the first optic angle interval α. The first image 13 indicates a correct seating position of the passenger 22 in an ergonomic aspect. In this seating position, the passenger 22 has a good sight and visibility of the surrounding traffic and pedestrians. Therefore the risk for traffic incidents and accidents when the passenger 22 is located in this seating position is relatively normal.
Fig. 1b shows an example of a second image 14 of the lenticular 3D object of the plastic card 11 when seen in the second optic angle interval β. This second image 14 indicates a too high seating position of the passenger 22.
Fig. 1c shows an example of a third image 15 of the lenticular 3D object of the plastic card 11 when seen in the third optic angle interval γ. This third image 15 indicates a too low seating position of the passenger 22. In the two last seating positions, the passenger 22 undoubtedly has a poor sight and visibility of the surrounding traffic and pedestrians as well. Therefore the risk for traffic incidents and accidents are most probably higher than normally when the passenger 22 is located in a too low and a too high seating position.

Naturally, the actual wording of the messages of the images of the lenticular 3D objects, the font, the colour, the size of the total lenticular 3D object and thereby the image(s), etc can differ considerably. Appropriately, these characteristics are tested out by ergonomically skilled people.

The inventive arrangement 10 operates according to the following. A passenger 22 such as the driver is seated in the driver's seat 21 of a vehicle. Preferably before driving, but also during or after driving, the driver accidentally glances, and sometimes even monitors the position indicator such as the plastic card 11 provided onto the area 20 in form of the A-pillar 23.

If the driver has obtained an unsatisfactory and incorrect seating position such as a too high seating position, the second image 14 of the lenticular 3D object indicates that, see Fig 1b. Then the driver may adjust his or hers seating position once or several times by adjusting the substantially vertical position or the inclination of the seat 21 in a substantially downward direction.
If the driver has obtained an unsatisfactory seating position such as a too low seating position, the third image 15 indicates that, see Fig 1b. In the same way the driver can adjust his or hers seating position once or several times by adjusting the substantially vertical position or inclination of the seat 21 in a substantially upward direction.

If the seating position is satisfactory and correct in an ergonomic aspect, i.e. if the passenger 22 is provided with a good sight and visibility of the surrounding traffic in the seated position, the passenger 22 obtains a type of confirmation thereof, see Fig. 1a. Preferably, the plastic card 11 is arranged to be transparent if the seating position is satisfactory in an ergonomic aspect.

In the preferred embodiment of the invention, the position of the passenger 22 is controlled in one direction such as the substantially vertical direction. However, as can be seen in Fig. 2 when the seating position in the horizontal direction (the longitudinal direction of the vehicle) is chosen by the passenger, the arrangement 10 may assist the passenger to obtain a correct seating position once again, i.e. confirm a good ergonomic position of the seating position of the passenger in substantially the vertical direction. That is, the seating position in the longitudinal direction of the vehicle naturally affects the correct vertical seating position of the passenger 22 as well.

Further, in this preferred embodiment is mainly the vertical seating position (z position in a conventional orthogonal system of coordinates) discussed. It may be assumed that the passenger him or her self picks a good position in the horizontal (the longitudinal direction of the vehicle, x position in an orthogonal system of coordinates) direction of the vehicle. Alternatively, the size of the message may be adjusted for the individual for assisting a passenger to obtain a correct seating position in the seat in the longitudinal direction of the vehicle.

Furthermore, the lateral seating position (y position in a conventional orthogonal system of coordinates) of the passenger seated in the seat in not discussed in this context. It is assumed that the position indicator 11 of the inventive arrangement can provide the passenger a good sight and visibility of the position indicator 11 in a sufficiently great optic angle interval in the lateral direction inside the vehicle compartment.

The invention has been described above and illustrated in the drawings by way of example only and the skilled person will recognize that various modifications may be made without departing from the scope of the invention as defined by the appended claims.

## Claims

1. An arrangement (10) for assisting a passenger (22) to obtain a correct seating position in a seat (21) of a vehicle, the vehicle comprising at least said seat (21) and an area (20) which may be seen by said passenger (22) when seated in said seat (21), and the arrangement (10) comprising a position indicator (11) being arranged to be provided on said area (20), and the position indicator (11) displaying at least a first image (13) when seen in at least a first corresponding optic angle interval (α), and a second image (14) when seen in at least a second corresponding optic angle interval (β).

2. An arrangement as claimed in claim 1,
**characterised in that** the position indicator (11) comprises a lenticular 3D object.

3. An arrangement as claimed in claims 1 or 2,
**characterised in that** the first image (13) indicates a correct seating position of the passenger (22) in an ergonomic aspect, and the second image (14) indicates an incorrect seating position of the passenger (22) in an ergonomic aspect.

4. An arrangement as claimed in claim 3,
**characterised in that** the lenticular 3D object displays also a third images (15) indicating incorrect seating positions in an ergonomic aspect when seen in a third optic angle intervals (γ), whereof the second image (14) indicates a too high vertical seating position of the passenger (22), and a third image (15) indicates a too low vertical seating position of the passenger (22).

5. An arrangement as claimed in claim 1 - 4,
**characterised in that** the area (20) that may be seen by the passenger (22) is a part of a pillar (23).

6. An arrangement as claimed in claim 5,
**characterised in that** the pillar (23) is constituted of an A, B or C pillar.

7. An arrangement as claimed in claims 1 - 6,
**characterised in that** the position indicator (11) is provided on the area (12) by means of a fastening means (16).

8. An arrangement as claimed in claim 1 - 7,
**characterised in that** the passenger (22) is the driver of the vehicle.

9. An arrangement as claimed in claims 1 and 3,
**characterised in that** a correct seating position of the passenger (22) in an ergonomic aspect relates to the position of the eyes of the passenger (22) for providing the passenger (22) a good sight and visibility of the surrounding traffic.

10. An arrangement as claimed in claims 1 and 9,
**characterised in that** the position of the eyes of the passenger (22) in relation to the position of the position indicator is adjustable for persons having different height and body constitution.

11. A vehicle comprising an arrangement (10) for assisting a passenger (22) to obtain a correct seating position in a seat (21) of the vehicle, the vehicle comprising at least said seat (21) and an area (20) which may be seen by said passenger (22) when seated in said seat (21), and the arrangement (10) comprising a position indicator (11) being provided on said area (20), and the position indicator (11) displaying at least a first image (13) when seen in at least a first corresponding optic angle interval (α), and a second image (14) when seen in at least a second corresponding optic angle interval (β).
